**Europäisches Patentamt**

**European Patent Office**

**Office européen des brevets**

(11) Numéro de publication: **0 274 935 B1**

(12) **FASCICULE DE BREVET EUROPEEN**

(45) Date de publication du fascicule du brevet:
**30.05.90**

(51) Int. Cl.⁵: **F16F 9/348,** F16F 9/50, B62D 55/112

(21) Numéro de dépôt: **87402778.2**

(22) Date de dépôt: **07.12.87**

(54) Amortisseur pour élément de suspension hydropneumatique de véhicule.

(30) Priorité: **26.12.86 FR 8618208**

(43) Date de publication de la demande:
**20.07.88 Bulletin 88/29**

(45) Mention de la délivrance du brevet:
**30.05.90 Bulletin 90/22**

(84) Etats contractants désignés:
**CH DE ES GB IT LI**

(56) Documents cités:
**EP-A- 0 205 389**
**DE-A- 3 029 884**
**FR-A- 2 229 567**

(73) Titulaire: **S.A.M.M.- Société d'Applications des Machines Motrices, Chemin de la Malmaison, F-91570 Bièvres(FR)**

(72) Inventeur: **Arnaud, Alain, 7, Avenue des Tilleuls, F-92290 Chatenay Malabry(FR)**
Inventeur: **Joseph, Philippe, Quartier Degay Loriol du Comtat, F-84200 Carpentras(FR)**
Inventeur: **Perrochat, Jean-Michel, 103, avenue Verdier, F-92120 Montrouge(FR)**

(74) Mandataire: **Martin, Jean-Paul et al, c/o CABINET LAVOIX 2, Place d'Estienne d'Orves, F-75441 Paris Cedex 09(FR)**

**Description**

La présente invention a pour objet un amortisseur pour élément de suspension hydropneumatique de véhicule, notamment de véhicule lourd.

On connaît des éléments de suspension hydropneumatique, en particulier oléopneumatique, pour véhicule lourd, comprenant des cartouches disposées dans la chambre hydraulique, entre le piston et la chambre de gaz. Il est ainsi connu de réaliser des cartouches amortisseurs constituées d'un amortisseur proprement dit et d'un clapet d'écrétage, ces cartouches étant traversées par le fluide hydraulique alternativement durant les déplacements du piston dans la chambre hydraulique, lorsque le véhicule roule sur terrain accidenté (voir par exemple le document FR-A 2 556 804). L'amortisseur fonctionne correctement jusqu'à une certaine vitesse maximum du véhicule, au-dessous de laquelle et tout particulièrement en terrain plus ou moins accidenté, les pics et chutes de pression hydrauliques très rapides déclenchés par le passage du véhicule sur des bosses et des creux sont absorbés par le clapet d'écrétage, double sens et à ouverture rapide associé à l'amortisseur.

Ce dernier est classiquement muni d'obturateurs élastiquement rappelés sur leur siège par des ressorts, ou par des rondelles élastiques maintenues en place par une vis.

Or, pour certaines catégories de véhicules lourds roulant au-dessus d'une vitesse déterminée, et tout particulièrement en terrains acccccidentés, on constate que l'amortisseur ne fonctionne pas et par conséquent ne permet pas les va-et-vient du fluide de part et d'autre des obturateurs ou rondelles élastiques. Ceci peut s'expliquer par le fait que lorsque la pression hydraulique décolle une rondelle de son siège, il apparait entre celui-ci et la rondelle une dé pression qui, ajoutée à la force de rappel élastique de la rondelle ou de l'obturateur, tend à refermer le passage avant qu'une quantité suffisante de fluide ait pu traverser l'amortisseur. L'expérience montre qu'ensuite il devient impossible de décoller l'obturateur de son siège, de sorte que les pressions hydrauliques extrêmement élevées (plusieurs centaines de bars) régnant à l'intérieur de la chambre hydraulique de l'élément de suspension peuvent entraîner la rupture complète du bras de cet élément, et par conséquent la mise hors service de la suspension.

Dans d'autres cas, les brutales variations de pression détruisent les rondelles, de sorte que la suspension est également mise hors service.

L'invention a donc pour but de réaliser un amortisseur qui soit capable de fonctionner effectivement en toute sécurité pour des vitesses très élevées du véhicule, en particulier sur terrain accidenté, malgré les pressions extrêmement importantes dans la chambre hydraulique, qui peuvent atteindre 1000 bars environ pour certains types de véhicules.

L'amortisseur visé par l'invention comprend un disque fixé dans une couronne de support, percé de lumières de passage du fluide hydraulique de part et d'autre du disque, des moyens autorisant ce passage dans un sens seulement pour certaines lumières dans le sens opposé pour les autres lumières, et des éléments de fixation desdits moyens au disque.

Suivant l'invention, les moyens précités comprennent, montés sur les deux faces opposées du disque, des empilements de rondelles métalliques élastiquement flexibles, disposées dans un déflecteur annulaire rigide situé en regard des lumières de passage du fluide hydraulique.

La présence de ce déflecteur, avantageusement constitué d'un métal ou d'un alliage métallique suffisamment résistant (acier), protège les rondelles contre tout risque de destruction par les pics ou chutes brutaux de pression hydraulique dans l'élément de suspension.

Suivant une autre particularité de l'invention, chaque lumière est délimitée par un insert tubulaire fixé dans un perçage traversant le disque de part en part, une partie des inserts étant pourvue de collerettes terminales, à raison d'une collerette par insert, faisant saillie sur une face du disque, tandis que les autres inserts sont munis de collerettes terminales faisant saillie sur la face opposée du disque, et ces collerettes saillantes sont dimensionnées de façon que les déflecteurs soient maintenus en appui élastique sur lesdites collerettes en obturant les inserts correspondants tant que la pression hydraulique est insuffisante pour écarter les déflecteurs des collerettes associées.

Suivant une autre caractéristique de l'invention, les déflecteurs sont en appui sur les collerettes des inserts par la surface annulaire d'une couronne radiale dudit déflecteur, dont la largeur et l'épaisseur de la paroi des inserts tubulaires, égale à la largeur de la surface annulaire, est déterminée entre des limites permettant effectivement l'écartement du déflecteur et son maintien à cet écartement de la collerette associée tant que la pression hydraulique reste suffisante, tout en évitant un matage de ladite collerette.

Les essais réalisés avec un tel amortisseur ont montré que celui-ci fonctionne de manière entièrement satisfaisante à des vitesses très élevées de véhicules lourds, y compris sur terrains accidentés.

D'autre particularités et avantages de l'invention apparaitront au cours de la description qui va suivre d'une forme de réalisation non limitative de l'amortisseur selon l'invention et de ses applications à deux suspensions hydropneumatiques :

- la Figure 1 est une vue mi-coupe longitudinale, mi-élévation d'un élément de suspension hydropneumatique destiné notamment à un véhicule lourd, et qui peut être équipé d'un amortisseur selon l'invention;
- la Figure 2 est une vue analogue à la Figure 1 d'un second élément de suspension hydropneumatique pouvant être équipé d'un amortisseur selon l'invention;

- la Figure 3 est une vue en coupe axiale d'une cartouche constituée par la combinaison d'un amortisseur selon l'invention et d'un clapet d'écrétage double sens à ouverture rapide, susceptible d'équiper des éléments de suspension tels que ceux des Figures 1 et 2, l'amortisseur et le clapet étant représentés au repos;

- la Figure 4 est une vue en coupe axiale et élévation partielle de l'amortisseur de la Figure 3;

- la Figure 5 est une vue en élévation en coupe suivant 5-5 de la Figure 4;

- la Figure 6 est une vue en coupe partielle à échelle agrandie d'un insert tubulaire et d'un déflecteur équipant l'amortisseur des Figures 3 à 5;

- les Figures 7 et 8 sont des vues analogues à la Figure 3, montrant l'amortisseur et le clapet respectivement en position de compression et de détente par le fluide hydraulique;

- la Figure 9 est une vue en élévation en bout de l'amortisseur suivant 9-9 de la Figure 10;

- la Figure 10 est une vue en coupe axiale d'une enveloppe tubulaire extérieure faisant partie de la cartouche des Figures 3 et 7, 8;

- la Figure 11 est une vue en section transversale suivant 11-11 de la Figure 10;

- la Figure 12 est une vue en élévation en bout suivant la flèche F de la Figure 10;

- et la Figure 13 est un graphique illustrant la variation, en fonction de la vitesse verticale de la roue du véhicule, de la force nécessaire, en compression et en détente, pour faire fonctionner l'amortisseur et le clapet d'écrétage des Figures 3 à 12.

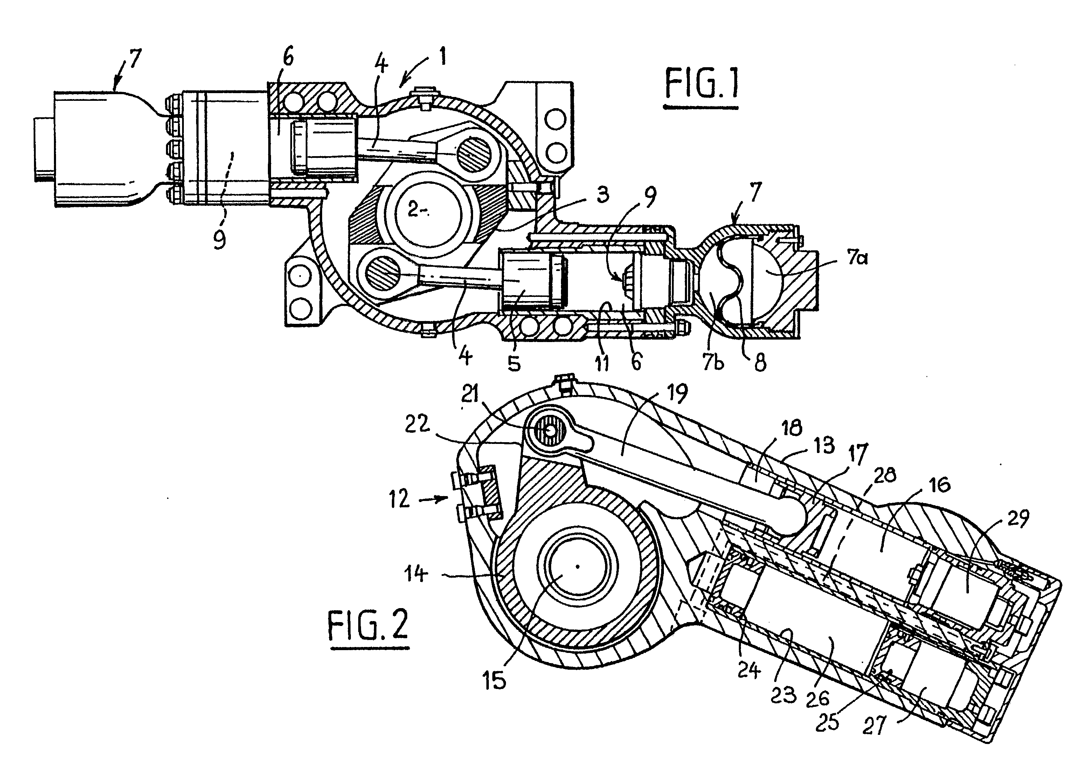

La Figure 1 montre un élément 1 de suspension hydropneumatique qui est décrit en détail dans le brevet français FR-A 2 556 804 de la Demanderesse, et dont la description détaillée n'est donc pas ici nécessaire.

L'élément 1 comprend un bras 2 support de roue, seule une coupe transversale de ce bras étant ici visible et l'extrémité de ce bras opposée à la partie visible aux dessins étant articulée sur un galet mobile verticalement, non représenté. Sur un balancier 3 solidaire du bras 2, sont articulées les extrémités des tiges 4 de deux pistons 5 susceptibles de se déplacer simultanément dans des sens opposés durant les oscillations du bras 2, à l'intérieur de chambres hydrauliques 6. A chaque chambre 6 est associé un accumulateur de gaz 7 à membrane souple 8 de séparation entre le compartiment 7a du gaz et le compartiment hydraulique 7b communiquant avec la chambre hydraulique 6, et une cartouche amortisseur 9. Cette dernière est logée dans l'extrémité de la chambre hydraulique 6 opposée au piston 5, en regard du compartiment hydraulique 7b avec lequel elle communique, la chambre 6 étant délimitée par une pièce 11 raccordée de manière étanche à l'accumulateur 7.

Chaque cartouche 9 est constituée par l'assemblage d'un amortisseur et d'un clapet d'écrétage double sens à ouverture rapide, l'amortisseur pouvant avantageusement être conforme à celui visé par l'invention.

La Figure 2 représente un second élément de suspension 12 pour véhicules lourds, du type de celui décrit par le brevet français FR-A 2 579 935 de la Demanderesse, et qui de ce fait ne sera donc pas décrit à nouveau en détail.

L'élément 12 comprend un bras 13 traversé par une fusée de roue (non représentée) du véhicule, et est articulé rotativement sur une partie fixe 14 solidaire du châssis (non représenté) du véhicule. La partie fixe 14 est coaxiale à un axe 15 relié au châssis, des moyens de roulement étant prévus entre le bras rotatif 13 et la partie fixe 14. Dans le bras 13 est ménagée une chambre hydraulique 16 qui contient un piston coulissant 17 séparant la chambre 16 d'un logement 18. Sur le piston 17 qui coulisse de façon étanche dans la chambre 16, est articulée une bielle 19 dont l'extrémité opposée au piston 17 est articulée sur un axe 21 fixé transversalement dans une patte 22 solidaire de la partie fixe 14.

Dans le bras 13 est par ailleurs ménagée une chambre pneumatique 23 d'axe parallèle à celui de la chambre hydraulique 16, et dans laquelle deux pistons librement coulissants 24, 25 délimitent deux chambres de gaz 26, 27. Du côté opposé à la chambre de gaz 26, le piston 24 reçoit la pression hydraulique provenant de la chambre 16 par une canalisation de liaison 28, dont une extrémité débouche dans la chambre 16 en regard d'une cartouche 29 constituée d'un amortisseur et d'un clapet d'écrétage double sens. La seconde extrémité de la canalisation 28 communique avec le circuit hydraulique (non représenté) du véhicule.

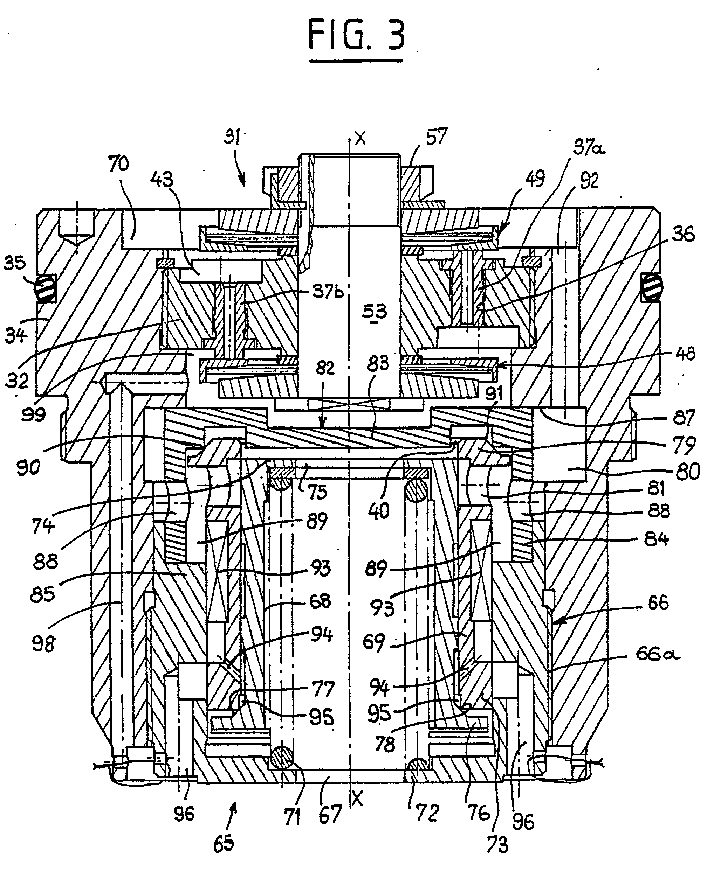

On décrira maintenant en référence plus particulièrement aux Figures 3 à 12 l'amortisseur et le clapet d'écrétage pouvant constituer les cartouches 9 et 29 des éléments de suspension des Figures 1 et 2 (ces exemples d'application de l'amortisseur et du clapet d'écrétage n'étant pas limitatifs).

A) Description de l'amortisseur (Figures 3 à 8)

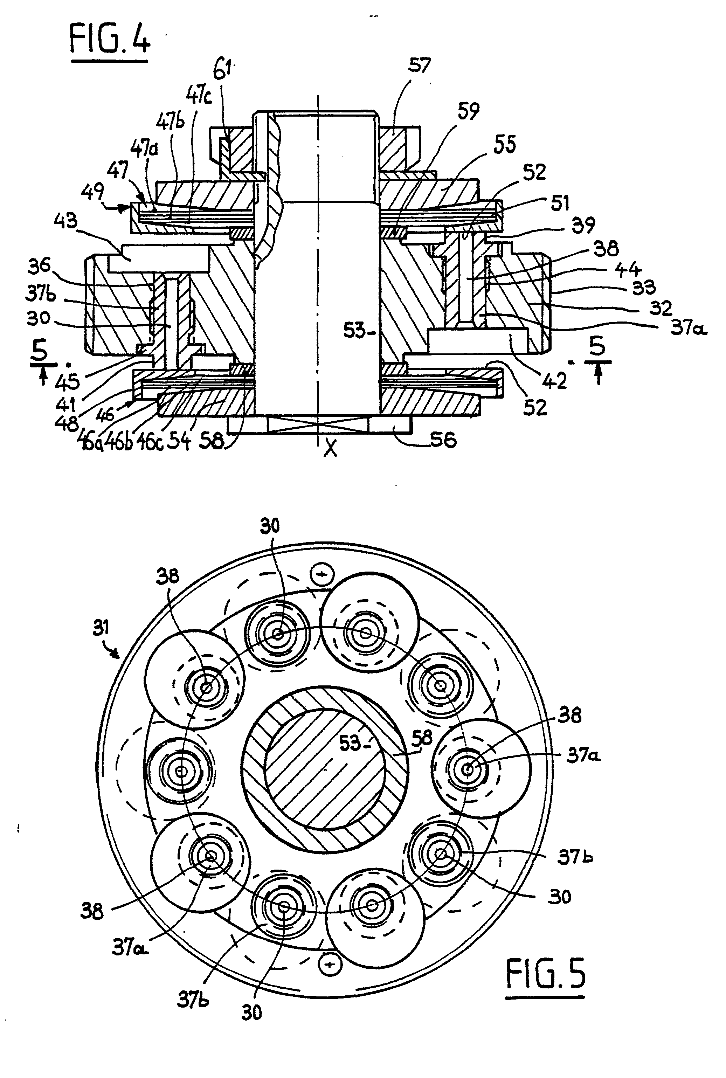

L'amortisseur 31 comprend un disque 32 muni d'un filetage extérieur 33 permettant de le visser dans une enveloppe tubulaire 34 munie d'un joint annulaire 35 d'étanchéité avec la paroi de la chambre hydraulique. Dans le disque 32, dont l'axe X-X est l'axe général de la cartouche (9 ou 29, Figure 1 ou 2) sont usinés des perçages 36 parallèles à l'axe X-X et régulièrement répartis autour de celui-ci, dans chacun desquels est fixé un insert tubulaire 37a, 37b dont la lumière intérieure 38, 30 débouche à ses extrémités opposées sur les deux faces du disque 32. On voit à la Figure 5, que dans cet exemple, les perçages 36 et les inserts correspondants sont au nombre de dix, ce nombre pouvant évidemment varier. Une partie

3

des inserts, à savoir une moitié de ceux-ci, référencés 37a, est pourvue de collerettes terminales respectives 39 faisant saillie par rapport à la face du disque 32, tournée vers la chambre hydraulique, tandis que les autres inserts, référencés 37b, sont munis chacun d'une collerette terminale faisant saillie par rapport à la face opposée du disque 32.

Les extrémités des inserts 37a, 37b opposées aux collerettes 39, 41 débouchent dans des évidements respectifs 42, 43 formés dans la face correspondante du disque 32, ces évidements 42, 43 étant de préférence cylindriques et décentrés axialement par rapport aux axes des inserts correspondants 37a, 37b. Les évidements 42 et 43 sont distribués régulièrement autour de l'axe X-X suivant une répartition alternée, de même que par conséquent les inserts associés 37a, 37b. Dans l'exemple décrit, les évidements 43 sont formés sur la face du disque 32 tournée vers la chambre hydraulique de l'élément de suspension, et les collerettes 39 diamétralement opposées aux évidements 43, font saillie sur cette même face du disque 32, à l'opposé du clapet d'écrétage 65 associé à l'amortisseur 31. Cette disposition est inversée pour les évidements 42 et les inserts associés 37b. Les inserts sont fixés dans le disque 32 par tout moyen approprié, par exemple par un filetage 44 venant se visser dans un taraudage du perçage associé 36, et par un épaulement annulaire 45 venu de matière avec le reste de l'insert 37a, 37b et saillant radialement dans un logement correspondant du disque 32.

L'amortisseur 31 est équipé de moyens autorisant le passage du fluide hydraulique à travers le disque 32 dans un sens seulement pour les lumières 38 des inserts 37a, et dans le sens opposé seulement pour les lumières 30 des inserts 37b. Dans le mode de réalisation décrit , ces moyens comprennent, montés sur les deux faces opposées du disque 32, des empilements 46, 47 de rondelles métalliques élastiquement flexibles, disposés dans un déflecteur annulaire rigide 48, 49 localisé en regard des lumières 38, 30 des inserts 37a, 37b. Dans l'exemple illustré à la Figure 4, chaque empilement 46, 47 est constitué de trois rondelles 46a, 46b, 46c et 47a, 47b, 47c dont les bords extérieurs sont retenus radialement par une aile circulaire 51 du déflecteur correspondant 48, 49 coaxiale à l'axe X-X. Chaque aile 51 se prolonge par une couronne radiale 52 perpendiculaire à l'axe X-X et dont la surface vient en appui sur l'extrémité annulaire des inserts respectifs 37a et 37b.

L'amortisseur 31 est complété par une vis 53 traversant axialement le disque 32 ainsi que les empilements de rondelles 46, 47 et les deux déflecteurs 48, 49. Les empilements 46, 47 et les déflecteurs 48, 49 sont maintenus en place par des organes annulaires 54, 55 traversés par la vis 53, disposés en appui sur les rondelles 46a,... 47a,.... dans la zone de celles-ci contiguë à la vis 53 et eux-mêmes fixés en place respectivement par une rondelle terminale 56 de la vis 53 et par un écrou 57. Deux rondelles 58, 59 sont interposées entre le disque 32 et les empilements 46, 47, et une troisième rondelle 61 est intercalée entre l'écrou 57 et l'organe annulaire 55.

Les rondelles 46a,...47a,..., les deux déflecteurs 48, 49 et les collerettes saillantes 39, 41 sont dimensionnés de manière que les couronnes 52 soient élastiquement maintenues par les rondelles correspondantes 46a,..., 47a,... sur les surfaces annulaires des collerettes respectives 39, 41, lorsque l'amortisseur 31 est au repos. Dans cette position (Figures 3-4), les parties de la surface des couronnes 52 qui ne sont pas en appui sur les collerettes 39, 41 sont donc distantes des évidements 43, 42 d'un intervalle égal à la profondeur de ceux-ci augmenté de l'écartement entre les couronnes 52 et les faces en regard du disque 32.

Le fonctionnement de cet amortisseur est le suivant :

Lorsque la pression hydraulique augmente brusquement sur une face du disque 32 jusqu'à une valeur suffisante prédéterminée, le fluide écarte des collerettes 39 ou 41, le déflecteur correspondant 49 ou 48, et le fluide s'écoule de l'autre côté du disque 32 par les lumières 38 ou 30. A cet écoulement du fluide s'oppose une dépression hydrodynamique précisément générée par cet écoulement entre le déflecteur 48 ou 49 et les surfaces annulaires des collerettes 41 ou 39, ainsi que la force de rappel élastique exercée par les empilements de rondelles 46 ou 47. L'écoulement du fluide se maintient donc tant que la pression hydraulique et la force amont ainsi créée sont supérieures à la dépression hydrodynamique et à la force de rappel élastique du déflecteur, qui tendent à rabattre celui-ci sur les collerettes 39 ou 41.

Or, la dépression hydrodynamique et la force correspondante exercée sur le déflecteur sont directement proportionnelles à la surface annulaire des collerettes 39, 41 en contact avec le déflecteur. Il en résulte que pour que le fluide puisse s'écouler effectivement à partir d'une certaine pression hydraulique, cette surface annulaire de contact ne doit pas dépasser une certaine valeur.

Inversement, si cette surface annulaire des inserts 37a, 37b en contact avec les déflecteurs 48, 49 est trop faible, la force d'appui de ceux-ci sur les collerettes 41, 39 risque de dépasser la limite de résistance élastique du matériau des inserts 37a, 37b, et par conséquent de provoquer un matage des collerettes 39, 41. On comprend donc que l'épaisseur de la paroi des inserts, c'est-à-dire la largeur de leur surface annulaire recevant les déflecteurs 48, 49, doit se situer entre des limites déterminées, dépendant des matériaux utilisés et de la pression hydraulique dans la chambre de l'élément de suspension.

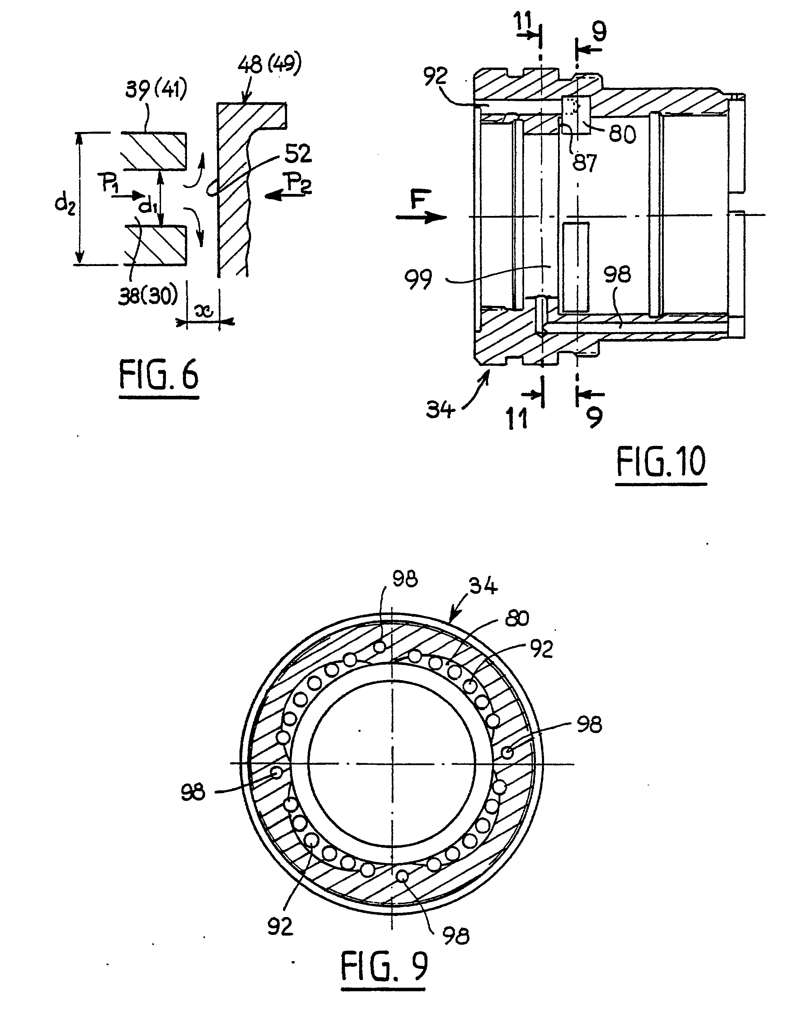

En référence maintenant à la Figure 6, ces limites peuvent être déterminées à partir des données suivantes :

- $d1$ = diamètre de la lumière 38 ou 30 de la collerette saillante 39, 41 de l'insert 37a ou 37b;
- $d2$ = diamètre extérieur de la collerette 39 ou 41;

- x = distance entre la surface de la couronne 52 du déflecteur 48 ou 49 et la surface annulaire de la collerette 39 ou 41 lorsque du fluide hydraulique à pression suffisante s'écoule de la lumière 38 (30) vers l'extérieur de déflecteur 48 (49);
- p1 = pression hydraulique dans la lumière;
- p2 = pression hydraulique dans le déflecteur;
- S = surface du déflecteur égale à la section de la lumière 38 (30) et recevant la pression p1.

L'équilibre dynamique est réalisé lorsque la relation ci-dessous est satisfaite, dans laquelle $F_1$ est la force exercée sur la surface S du déflecteur par la pression p1, F2 est la force élastique de rappel du déflecteur, et F3 est la force créée par la dépression hydrodynamique entre la collerette 39 et le déflecteur 48.

$$F_1 = F_2 + F_3 \left(\frac{d2}{d1},\ x\right)$$

$$\text{soit } (p1 - p2)S = F_2 + F_3$$

$$\text{d'où } (p1 - p2)\,\pi\,\left(\frac{d1}{2}\right)^2 = F_2 + \alpha\,.F_2$$

$$\text{et } x = f\left[(p1 - p2)\,d_1^2\ ;\ \frac{d1}{d2}\right]$$

En effet, la dépression hydrodynamique est aussi fonction de la force élastique de rappel $F_2$ du déflecteur. Cependant, cette force de rappel hydrodynamique est d'abord fonction du rapport d2/d1, de sorte que si ce rapport est trop élevé, donc si la surface de contact est trop importante, le déflecteur ne s'écarte pas de l'insert, ou bien se rabat sur celui-ci immédiatement après s'en être écarté, et l'obture définitivement. Inversement, si le rapport d2/d1 est trop faible (étant à la limite égal à 1), la limite élastique de résistance du matériau de l'insert sera atteinte ou dépassée, et il se produira un matage du pourtour de la collerette 39 ou 41, qui rendra l'amortisseur impropre à fonctionner.

Ainsi, la relation ci-dessous doit être verifiée.

$$A < \frac{d2}{d1} < B$$

où A est un coefficient correspondant à la limite élastique du matériau de l'insert et B est la valeur du rapport d2/d1 à partir de laquelle le déflecteur se referme et bloque l'amortisseur.

A titre d'exemple indicatif, en fonction des matériaux utilisés pour l'amortisseur et de la pression hydraulique régnant dans l'élément de suspension (qui peut atteindre 1000 bars environ dans certains véhicules lourds), on peut avoir $\alpha = 0,25$. On peut donc déterminer les valeurs limites du rapport d2/d1.

Parmi les variantes d'exécution possibles de l'amortisseur 31, on citera notamment les suivantes : le nombre des rondelles élastiques 46a-47c peut varier, ces rondelles étant choisies en un matériau convenable, de même que les déflecteurs 48, 49 qui peu vent être réalisés de préférence en acier. Le nombre des inserts 37a, 37b et des perçages 36 peut également varier et ils peuvent être fixés dans le disque 32 par tout moyen approprié.

On notera que les surfaces des organes annulaires 54, 55 faisant face aux rondelles 46a-47c sont d'abord planes à partir de la vis 53, puis tronconiques, afin de réserver entre ces rondelles et les lesdites surfaces tronconiques un intervalle croissant jusqu'à la périphérie des organes 54, 55. Cet agencement autorise le débattement élastique nécessaire pour les rondelles et les déflecteurs 48, 49.

B) Description du clapet d'écrétage (Figures 3, 7 à 12)

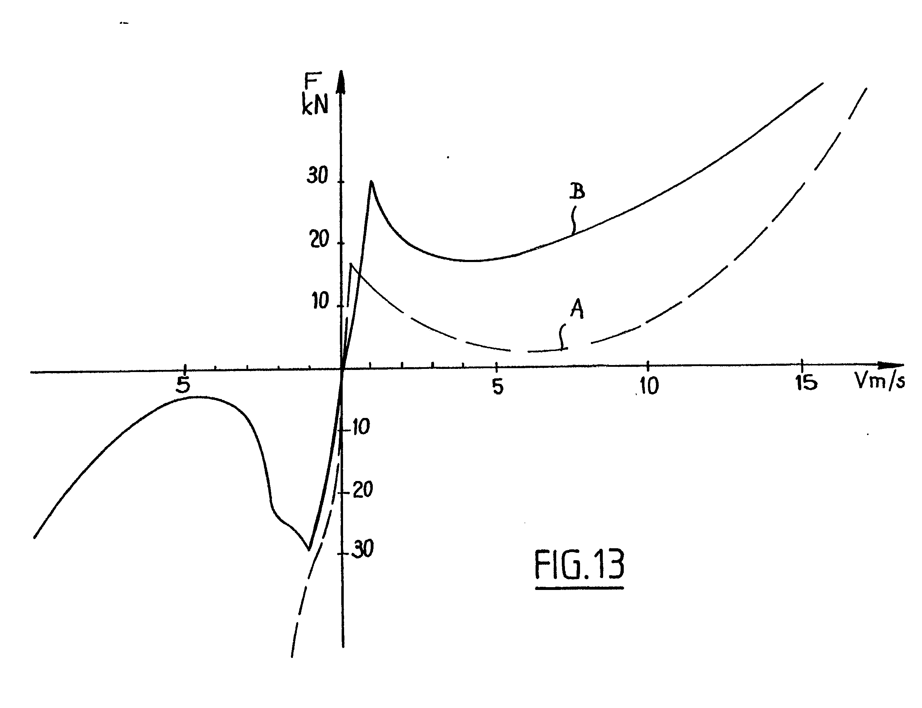

Avec les clapets connus d'écrétage double sens à ouverture rapide, on observe un double inconvénient qui peut être expliqué en référence à la Figure 13. Sur celle-ci, on a représenté en ordonnées la force (en kN) nécessaire à l'ouverture d'un clapet d'écrétage connu en fonction de la vitesse V du véhicule (en m/s), c'est-à-dire en fonction du débit d'écrétage, lequel est proportionnel à la vitesse. La partie de la courbe A pour des vitesses positives (abscisses) correspond à la compression du fluide, tandis que la partie en abscisses négatives correspond à la détente. Les deux parties de la courbe A à pente très forte (pics) de part et d'autre de V = o correspondent aux va-et-vient du fluide par le seul amortisseur (débit de laminage).

On voit qu'aux vitesses verticales moyennes de la roue, c'est-à-dire d'environ 5 à 10 m/s du véhicule, la force nécessaire à l'ouverture du clapet en compression est relativement faible. Il en résulte que lorsque le véhicule franchit une bosse à ces vitesses, il se produit un phénomène de talonnage en butée de la caisse du véhicule, dunc une secousse désagréable pour les occupants de celui-ci. Au-dessus de ces vitesses, la force de déclenchement croît rapidement. D'autre part, en détente, pour des vitesses verticales négatives comprises entre 0 et - 2 m/s environ, on voit d'après cette partie de la courbe A, que la force nécessaire pour assurer effectivement le passage du fluide d'abord dans l'amortisseur, puis à travers le clapet, est très élevée. Ceci signifie qu'après passage d'une bosse à faible vitesse, les roues ou galets du véhicule ne retombent pas suffisamment vite pour reprendre contact avec le sol avant la caisse. L'ensemble caisse et routes tombe donc en même temps, ce qui produit un nouveau choc très inconfortable pour les occupants du véhicule.

Le clapet d'écrétage 65 illustré aux Figures 3 et 7 à 12 est réalisé de manière à pouvoir éliminer ces inconvénients des clapets antérieurs.

Le clapet 65 est logé dans l'enveloppe tubulaire 34 contenant l'amortisseur 31, (ce dernier pouvant être remplacé par tout autre amortisseur approprié), et comprend un corps tubulaire 66 vissé dans l'enveloppe 34 par un filetage 66a, présentant une ouverture centrale 67 du côté du fond de la chambre hydraulique opposé au piston, c'est-à-dire du côté de l'accumulateur (sur la Figure 1 : chambre 6, piston 5 et accumulateur 7), cette ouverture 67 étant destinée au passage du fluide hydraulique.

Le clapet 65 comporte par ailleurs un tiroir creux 68 monté coulissant suivant l'axe général X-X du clapet 65 et de l'amortisseur 31 à l'intérieur d'une fourrure 69 elle-même montée coulissante suivant X-X dans le corps 66 et coaxiale au tiroir 68. Un organe élastique constitué dans cet exemple par un ressort hélicoïdal 71 prend appui sur un épaulement annulaire 72 du corps 66 délimitant l'ouverture centrale 67 et pousse le tiroir 68 en butée contre une première extrémité annulaire 73 de la fourrure 69. A cet effet, l'extrémité du ressort 71 opposée à l'ouverture 67 s'appuie sur un second épaulement annulaire 74 du tiroir 68, formé à son extrémité opposée à l'ouverture 67 et délimitant une seconde ouverture centrale 75 du tiroir 68. La partie terminale 76 du tiroir 68 voisine de l'ouverture 67 et constituée par un collet radial, présente un siège annulaire tronconique 77 normalement maintenu en appui contre une arête terminale 78 de la fourrure 69 par le ressort 71.

La seconde extrémité annulaire 79 de la fourrure 69, opposée à la partie terminale 76, est percée d'ouvertures radiales 81 obturées par le tiroir 68 tant que ce dernier est maintenu en butée contre la fourrure 69 par le ressort 71.

Par ailleurs, le clapet 65 comprend un chapeau 82 de fermeture du corps 66 du côté de celui-ci opposé à son ouverture centrale 67, c'est-à-dire du côté de l'ouverture 75 du tiroir 68. Le chapeau 82, constitué d'un fond 83 perpendiculaire à l'axe X-X et d'une jupe annulaire 84 coaxiale à l'axe X-X, est fixé entre un épaulement interne cylindrique 85 du corps 66 et un autre épaulement annulaire 87 de l'enveloppe 34. Le pourtour de fond 83 est donc en butée contre l'épaulement 87, tandis que l'extrémité annulaire de la jupe 84 est en butée contre l'épaulement 85 (Figures 3, 7 et 8). Dans la jupe 84 sont ménagées des lumières radiales 88 en communication avec les ouvertures radiales 81 par des chambres correspondantes 89, délimitées entre la fourrure 69 et la jupe 84.

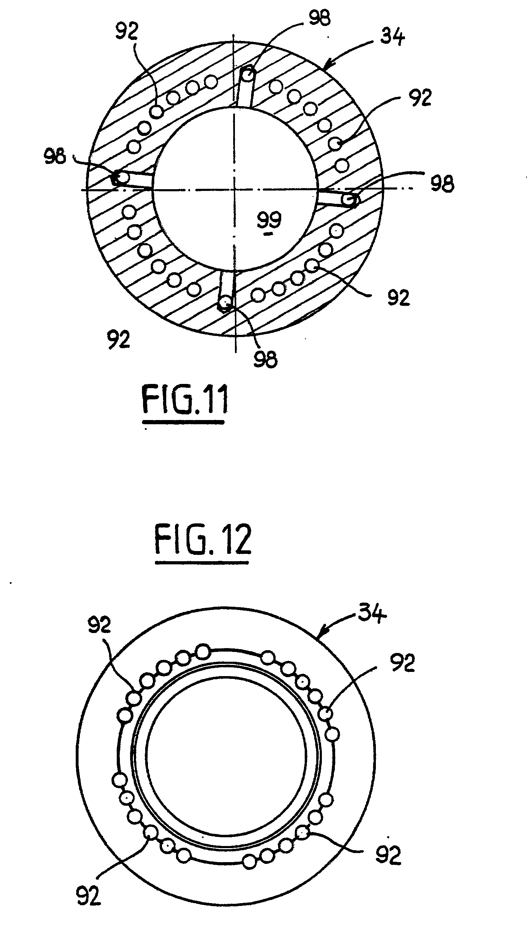

La partie terminale 79 de la fourrure 69 contiguë au chapeau 82 présente un siège tronconique 91 d'appui sur une arête circulaire 90 du chapeau 82, sur laquelle elle est sollicitée en appui par l'extrémité 76 du tiroir 68, lui-même sollicité par le ressort 71. La section annulaire du siège 91 est supérieure à la section annulaire du siège 77 d'appui du tiroir 68 contre la partie terminale 73 de la fourrure 69. Des canalisations longitudinales 92 formées dans l'enveloppe 34, au nombre de 24 dans cet exemple (Figure 12) et réparties autour de l'axe X-X, débouchent, d'une part dans des chambres 80 (Figure 9) communiquant avec les lumières 88, et d'autre part dans une cavité 70 de l'enveloppe 34 et dans la chambre hydraulique de l'élément de suspension, au niveau du déflecteur 49 de l'amortisseur 31, donc du côté de l'enveloppe 34 opposé au chapeau 82.

Des conduits longitudinaux 93 sont agencés dans la fourrure 69 et communiquent, d'une part avec les chambres 89, et d'autre part avec des perçages tranversaux 94 de la fourrure 69, contigus à sa partie terminale 73. Les perçages 94 communiquent eux-mêmes avec des dégagements longitudinaux 95 réservés entre l'extrémité adjacente 76 du tiroir 68 et la partie terminale 73 de la fourrure 69. Ces dégagements 95 sont fermés par le siège annulaire 77 d'appui du tiroir 68 sur l'arête 78 de la fourrure 69, tant que le tiroir 68 est appliqué en butée contre ladite fourrure 69.

Des canalisations longitudinales 96 ménagées dans le corps 66 débouchent à l'une de leurs extrémités du côté opposé au chapeau 82, tandis que leurs extrémités opposées sont obturées par l'extrémité correspondante 73 de la fourrure 69 lorsque cette der nière est en butée par son siège 91 contre le chapeau 82.

L'épaulement annulaire 85 du corps 66 délimite, d'une part les chambres 89 et d'autre part les canalisations longitudinales 96 ainsi que, par la paroi intérieure de son épaulement 85, les conduits longitudinaux 93 de la fourrure 69.

Des canaux longitudinaux 98, au nombre de quatre dans cet exemple, sont formés dans l'enveloppe 34 et leurs extrémités débouchent respectivement sur la face de l'enveloppe 34 opposée au chapeau 82, et dans un logement 99 à l'intérieur de l'enveloppe 34, contenant l'amortisseur 31 de laminage du fluide hydraulique.

Le fonctionnement du clapet d'écrétage 65 qui vient d'être décrit est le suivant.

1 - Au repos, le clapet 65 est dans la situation représenté à la Figure 3. Les pressions hydrauliques sont équilibrées de part et d'autre du clapet, le ressort 71 maintient le tiroir 68 en butée contre la fourrure 69 par son siège 77 appliqué contre l'arête 78, de sorte que les dégagements 95 sont fermés, la fourrure 69 est en butée par son siège 91 sur l'arête 90 du chapeau 82, et les ouvertures radiales 81 sont fermées par le tiroir 68. Aucun passage de fluide ne s'effectue donc à travers le clapet 65.

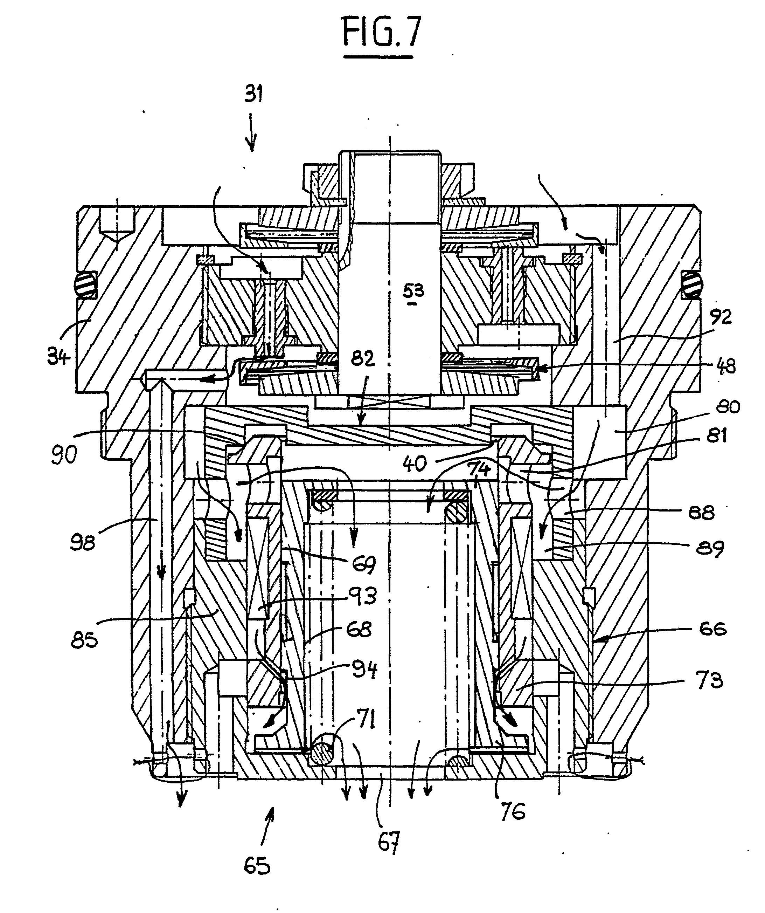

2 - Fonctionnement du clapet 65 en compression (figure 7)

Si une brusque augmentation de la pression hydraulique au-delà d'une valeur déterminée se produit dans la chambre de l'élément de suspension, une partie du fluide écarte le déflecteur 48 des inserts 37b et pénètre donc dans le logement 99, d'où il s'écoule par les canaux 98 vers le côté opposé du clapet 65, donc vers l'accumulateur.

Une autre partie du fluide emprunte les conduits 92, la chambre 80, les lumières 88, les chambres 89, les conduits 93 et les perçages 94 ainsi que les dégagements 95. La pression exercée sur le tiroir 68 dans les dégagements 95 écarte alors le siège 77 de l'arête 78, et par conséquent le tiroir 68 de la fourrure 69, l'extrémité 76 du tiroir 68 venant en butée contre celle du corps 66. De ce fait, un faible débit de fluide s'écoule à partir des dégagements 95 entre les extrémités 73 et 76 puis entre l'extrémité 76 et le corps 66, et passe par l'ouverture 67. Simultanément du fluide hydraulique s'écoule par les lumières 81 ouvertes, entre l'extrémité 79 de la fourrure 69 et l'extrémité contiguë 74 du tiroir 68. Ce fluide traverse donc le tiroir 68 d'où il sort par l'ouverture 67.

Les différents trajets suivis par le fluide pendant la compression sont symbolisés par les flèches portées sur la Figure 7, sa plus grande partie s'écoulant par les conduits 92 et par le clapet 65.

La courbe B de la Figure 13 illustre un exemple de fonctionnement de l'ensemble clapet 65-amortisseur 31 : on voit qu'aux faibles vitesses, positives (compression), inférieures à 1 m/s environ, l'amortisseur 31 suffit à assurer le passage du fluide par les canaux 98, tandis qu'aux vitesses plus élevées du véhicule, le clapet 65 s'ouvre et son débit d'écrétage s'ajoute au débit de laminage de l'amortisseur 31. Le pic de laminage est nettement supérieur à celui de la courbe A, et la courbe B montre que la force nécessaire à l'ouverture du clapet 65 est également largement supérieure à celle des clapets antérieurs connus (courbe A), ce qui évite le phénomène néfaste de talonnage expliqué précédemment.

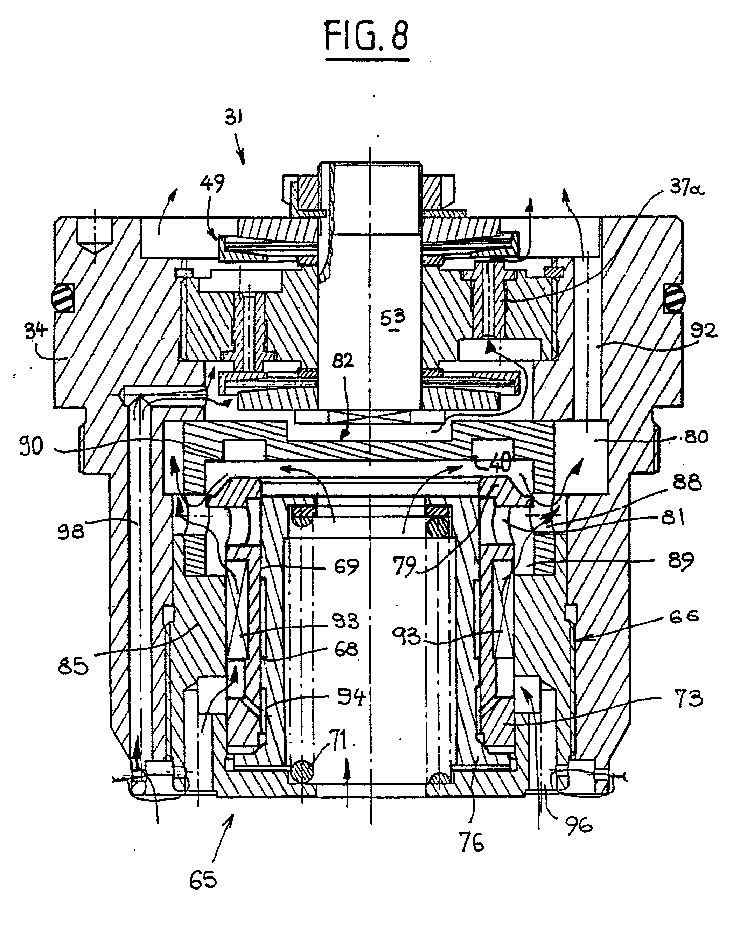

3 - Fonctionnement du clapet d'écrétage 65 en détente (Figure 8)

Dans ce cas, un brusque pic de pression hydraulique se produit à l'intérieur du tiroir 68, après passage du véhicule sur une bosse. La pression s'exerce sur le fond 83 du chapeau 82, puis sur le siège 91 de la fourrure 69, grâce à un intervalle annulaire 40 de passage réservé entre la partie terminale 79 de la fourrure 69 et le fond 83. La section annulaire du siège 91 étant supérieure à celle du siège 77 sur laquelle s'applique la même pression, entre les extrémités 73 et 76 de la fourrure 69 et du tiroir 68, la pression différentielle ainsi créée au niveau du siège 91 écarte celui-ci de l'arête 90, tandis que le siège 77 reste appliqué sur l'arête 78. La fourrure 69 coulisse et entraîne le tiroir 68 en butée contre l'extrémité annulaire du corps 66. De ce fait, le fluide hydraulique pénètre dans les chambres 89, les lumières 88 et les chambres 80, et de là s'écoule par les conduits 92 dans la chambre hydraulique.

En même temps, une autre partie du fluide s'écoule des conduits 96 dans les conduits 93 par l'intervalle ouvert entre le corps 66 et la fourrure 69, et de là par les lumières 88 dans les canalisations 92, tandis que le débit de laminage du fluide s'écoule par les canaux 98, le logement 99 et les inserts 37a en écartant de ceux-ci le déflecteur 49.

La plus grande partie du débit d'écrétage du clapet 65 passe latéralement par les conduits 96, 93, les chambres 89 et les lumières 88, et non entre le chapeau 82 et l'extrémité 79 de la fourrure 69.

Le clapet 65 absorbe le surplus par rapport au débit de laminage de l'amortisseur 31, qui emprunte les canaux 98.

La partie de la courbe B de la Figure 13 correspondant à des abscisses négatives montre que la force nécessaire à l'ouverture du clapet 65 en détente est d'abord légèrement inférieure à la force correspondante pour la courbe A, puis décroît rapidement au-delà d'une vitesse de 1 m/s, jusqu'à environ 5 m/s. ceci signifie qu'immédiatement après passage d'une bosse, la roue ou le galet associé à l'élément de suspension redescend beaucoup plus rapidement qu'avec un clapet antérieur (courbe A), ce qui évite le choc mentionné ci-dessus lorsque la caisse du véhicule reprend appui sur l'élément de suspension.

**Revendications**

1 - Amortisseur (31) pour élément de suspension hydropneumatique (1, 12) de véhicule, notamment de véhicule lourd, comprenant : un disque (32) fixé dans une enveloppe extérieure (34), percé de lumières (30, 38) de passage du fluide hydraulique de part et d'autre du disque, des moyens (48, 49, 37a, 37b) autorisant ce passage dans un sens seulement pour certaines lumières (30) et dans le sens opposé pour les autres lumières (38), et des éléments (53, 54, 55) de fixation desdits moyens au disque, caractérisé en ce que les moyens précités comprennent, montés sur les deux faces opposées du disque (32), des empilements (46, 47) de rondelles métalliques (46a-46c; 47a-47c) élastiquement flexibles, disposées dans des déflecteurs annulaires rigides (48, 49) situés en regard des lumières (30, 38) de passage du fluide hydraulique.

2 - Amortisseur selon la revendication 1, caractérisé en ce que chaque lumière (38, 30) est délimité par un insert tubulaire (37a, 37b) fixé dans un perçage (36) traversant le disque (32) de part en part, une partie (37a) des inserts étant pourvue de collerettes terminales (39) faisant saillie sur une face du disque tandis que les autres inserts (37b) sont munis de collerettes terminales (41) faisant saillie sur la face opposée du disque, et ces collerettes saillantes (39, 41) sont dimensionnées de façon que les déflecteurs (48, 49) soient maintenus en appui élastique sur lesdites collerettes (41, 39) en obturant les inserts correspondants (37b, 37a) tant que la pression hydraulique est insuffisante pour écarter les déflecteurs des collerettes associées.

3 - Amortisseur selon la revendication 2, caractérisé en ce que les extrémités des inserts tu bulaires (37a, 37b) opposées à leurs collerettes saillantes (39, 41) débouchent dans des évidements (42, 43) formés dans la face correspondante du disque (32), en regard du déflecteur (48, 49) monté sur ladite face.

4 - Amortisseur selon la revendication 3, caractérise en ce qu'il comprend une vis (53) traversant axialement le disque (32) ainsi que des organes annulaires (54, 55) de maintien des empilements (46, 47) de rondelles et des déflecteurs (48, 49) prévus de chaque côté du disque (32), ces organes annulaires (54, 55) étant eux-mêmes maintenus contre les rondelles (46a-46c, 47a-47c) aux deux extrémités opposées de la vis axiale (53).

5 - Amortisseur selon l'une des revendications 2 à 4, caractérisé en ce que chaque déflecteur (48, 49) est en appui sur les collerettes terminales (41, 39) des inserts (37b, 37a) par la surface annulaire d'une couronne radiale (52) dudit déflecteur, et l'épaisseur de la paroi des inserts tubulaires, égale à la largeur de ladite surface annulaire, est déterminée entre des limites permettant effectivement l'écartement du déflecteur (48, 49) et son maintien à cet écartement de la collerette associée (41, 39) tant que la pression hydraulique reste suffisante, tout en évitant un matage de ladite collerette.

6 - Dispositif d'amortissement et d'écrétage pour élément de suspension hydrodynamique de véhicule, caractérisé en ce qu'il est constitué par la combinaison d'un amortisseur selon l'une des revendications 1 à 5, et d'un clapet d'écrétage double sens à ouverture rapide (65).

**Patentansprüche**

1. Stoßdämpfer (31) für ein hydropneumatisches Federungselement (1, 12) eines Fahrzeugs, insbesondere eines schweren Fahrzeuges, welcher aufweist: eine Scheibe (32), die in einer äußeren Umhüllung (34) befestigt ist, durchsetzt mit Öffnungen (30, 38) für den Hindurchtritt von hydraulischem Fluid beiderseits der Scheibe, Einrichtungen (48, 49, 37a, 37b), welche diesen Hindurchtritt nur in eine Richtung für gewisse Öffnungen (30) und in die Gegenrichtung für die andere Öffnungen (38) erlauben, und Befestigungselemente (53, 54, 55) der genannten Scheibeneinrichtungen, dadurch gekennzeichnet, daß die vorgenannten Einrichtungen auf den beiden gegenüberliegenden Seiten der Scheibe (32) angeordnete Stapel (46, 47) von metallischen Rädern oder Scheiben (46a–46c; 47a–47c), die elastisch flexibel sind, aufweisen, die in starren ringförmigen Abweisern (48, 49) angeordnet sind, die gegenüber der Öffnungen (30, 38) für den Hindurchtritt des Hydraulikfluids angeordnet sind.

2. Stoßdämpfer nach Anspruch 1, dadurch gekennzeichnet, daß jede Öffnung (38, 30) durch einen rohrförmigen Einsatz (37a, 37b) begrenzt ist, der in einer Durchbohrung (36) befestigt ist, die die Scheibe (32) gänzlich durchquert, wobei ein Bereich (37a) der Einsätze mit Endflanschen (39) versehen ist, die auf einer Seite der Scheibe vorspringen, während die anderen Einsätze (37b) mit Endflanschen (41) versehen sind, die auf der gegenüberliegenden Seite der Scheibe vorspringen, und diese vorspringenden Flansche (39, 41) derart dimensioniert sind, daß die Abweiser (48, 49) in elastischem Andruck auf die genannte Flansche (41, 39) gehalten werden unter Verschließen der entsprechenden Einsätze (37b, 37a) solange der hydraulische Druck ungenügend ist, um die Abweiser von den zugeordneten Flanschen zu beabstanden.

3. Stoßdämpfer nach Anspruch 2, dadurch gekennzeichnet, daß die rohrförmigen Einsätze (37a, 37b) gegenüberliegend ihren vorspringenden Flanschen (39, 41) in Ausnehmungen (42, 43) münden, die in der entsprechenden Seite der Scheibe (32) gegenüber dem Abweiser (48, 49) ausgebildet sind, der auf der genannten Seite angeordnet ist.

4. Stoßdämpfer nach Anspruch 3, dadurch gekennzeichnet, daß er eine Schraube (53) aufweist, die axial die Scheibe (32) durchquert, sowie ringförmige Halteorgane (54, 55) der Stapel (46, 47) der Scheiben und der Abweiser (48, 49) aufweist, die an jeder Seite der Scheibe (32) vorgesehen sind, wobei die ringförmigen Organe (54, 55) selbst gegen die Scheiben (46a–46c, 47a–47c) an beiden gegenüberliegenden Enden der axialen Schraube (53) gehalten werden.

5. Stoßdämpfer nach einem der Ansprüche 2 bis 4, dadurch gekennzeichnet, daß jeder Abweiser (48, 49) in Andruck auf die Endflansche (41, 39) der Einsätze (37b, 37a) durch die ringförmige Fläche eines radialen Kranzes (52) des Abweisers ist, und die Dicke der Seitenwand der rohrförmigen Einsätze gleich der Breite der ringförmigen Fläche ist, und zwischen Grenzen bestimmt ist, die wirksam die Beabstandung des Abweisers (48, 49) und seines Haltens bei diesem Abstand von dem zugehörigen Flansch (41, 39) erlauben, solange der hydraulische Druck ausreichend bleibt, unter jeglicher Vermeidung eines Dichtstemmens des Flansches.

8

## EP 0 274 935 B1

6. Stoßdämpfer und Spitzenbegrenzungsvorrichtung für ein hydrodynamsiches Stoßdämpferelement eines Fahrzeugs, dadurch gekennzeichnet, daß sie aus einer Kombination eines Stoßdämpfers nach einem der Ansprüche 1 bis 5 und einer in zwei Richtungen wirkenden Spitzenbegrenzungsklappe mit schneller Öffnung (65) gebildet ist.

## Claims

1. Shock absorber (31) for a hydropneumatic suspension element (1, 12) of a vehicle, especially a heavy vehicle, comprising a disk (32) fastened in an outer casing (34) having ports (30, 38) for the passage of the hydraulic fluid on either side of the disk, means (48, 49, 37a, 37b) allowing this passage in only one direction for some ports (30) and in the opposite direction for the other ports (38), and elements (53, 54, 55) for fastening the said means to the disk, characterized in that the abovementioned means comprise, mounted on the two opposite faces of the disk (32), stacks (46, 47) of elastically flexible metal washers (46a–46c; 47a–47c) arranged in rigid annular deflectors (48, 49) located opposite the hydraulic-fluid passage ports (30, 38).

2. Shock absorber according to Claim 1, characterized in that each port (38, 30) is delimited by a tubular insert (37a, 37b) fastened in a bore (36) passing right through the disk (32) , some (37a) of the inserts being equipped with end collars (39) projecting on one face of the disk, whilst the other inserts (37b) are equipped with end collars (41) projecting on the opposite face of the disk, and the dimensions of these projecting collars (39, 41) are such that the deflectors (48, 49) are held elastically up against the said collars (41, 39), thereby shutting off the corresponding inserts (37b, 37a), as long as the hydraulic pressure is insufficient to move the deflectors away from the associated collars.

3. Shock absorber according to Claim 2, characterized in that the ends of the tubular inserts (37a, 37b) opposite their projecting collars (39, 41) open into recesses (42, 43) made in the corresponding face of the disk (32), opposite the deflector (48, 49) mounted on the said face.

4. Shock absorber according to Claim 3, characterized in that it possesses a screw (53) passing axially through the disk (32), and annular members (54, 55) intended for retaining the stacks (46, 47) of washers and the deflectors (48, 49) which are provided on each side of the disk (32), these annular members (54, 55) themselves being held against the washers (46a–46c, 47a–47c) at the two opposite ends of the axial screw (53).

5. Shock absorber according to one of the claims 2 to 4, characterized in that each deflector (48, 49) bears against the end collars (41, 39) of the inserts 37b, 37a) by means of the annular surface of a radial ring (52) of the said deflector, and the thickness of the wall of the tubular inserts, equal to the width of the said annular surface, is set between limits effectively allowing the deflector (48, 49) to move away from and keep away from the associated collar (41, 39) as long as the hydraulic pressure remains sufficient, at the same time preventing bruising of the said collar.

6. Shock-absorbing and peak-limiting device for a hydrodynamic vehicle suspension element, characterized in that it is formed by the combination of a shock absorber according to one of the claims 1 to 5 and a bidirectional quick-opening peak-limiting valve (65).

FIG.1

FIG.2

# FIG. 3

# FIG.4

# FIG.5

FIG.6

FIG.10

FIG. 9

FIG.7

EP 0 274 935 B1

# FIG.8

FIG.11

FIG.12

FIG.13